**Europäisches Patentamt**

**European Patent Office**

**Office européen des brevets**

(19)

(11) **EP 0 800 036 A1**

(12) # EUROPEAN PATENT APPLICATION

(43) Date of publication:
08.10.1997 Bulletin 1997/41

(51) Int. Cl.$^6$: **F21V 8/00**

(21) Application number: **97104634.7**

(22) Date of filing: **18.03.1997**

(84) Designated Contracting States:
**DE FR GB**

(30) Priority: **04.04.1996 JP 82270/96**
**06.09.1996 JP 236976/96**

(71) Applicant: **HITACHI CABLE, LTD.**
**Chiyoda-ku Tokyo 100 (JP)**

(72) Inventors:
• **Abe, Tomiya**
**Hitachi-shi, Ibaraki 319-14 (JP)**
• **Hirano, Koki**
**Hitachi-shi, Ibaraki 317 (JP)**

• **Nakahigashi, Fumitaka**
**Hitachi-shi, Ibaraki 319-14 (JP)**
• **Matsumoto, Masanori**
**Hitachi-shi, Ibaraki 319-14 (JP)**
• **Hayakawa, Yoshikazu**
**Hitachi-shi, Ibaraki 319-14 (JP)**
• **Sasaki, Tohru**
**Hitachi-shi, Ibaraki 319-14 (JP)**

(74) Representative: **Strehl Schübel-**
**Hopf Groening & Partner**
**Maximilianstrasse 54**
**80538 München (DE)**

(54) **Lighting system**

(57)     A small-size and light-weight lighting system of
plane- or line-emitting type is provided.

In a lighting system in which light is let in from one
side surface of a light guiding plate (4) and emitted from
all over a front surface (7) thereof, a small-size and light-
weight lighting system of plane-emitting type can be
obtained by arranging a light guiding rod (3) in a position
opposite to said one surface of the plate (4) and con-
necting the light guiding rod (3) to an optical fibre (2)
coupled to a light source (1).

In a lighting system in which light is let in from one
end (3a) of a light guiding rod (3) and emitted from a
side surface of the rod (3) in the form of a belt-shaped
line, a small-size and light-weight lighting system of line-
emitting type can be obtained by providing a light scat-
tering working treated portion (11) having a pattern the
area ratio of which increases with increasing distance
from said one rod end (3a), the pattern being provided
on a side surface of the rod (3) in the side opposite the
light emitting surface, and providing a light reflecting
portion (20) in the other rod end (3b).

FIG. 1

EP 0 800 036 A1

**Description**

BACKGROUND OF THE INVENTION

The present invention relates to a lighting system, and more particularly relates to a lighting system using a light guiding rod.

Use of thin plane-emitting lighting systems is growing widely in various fields as a back-light for a liquid crystal display, an interior light in a room, a signboard and various kinds of indicating lights. These systems have a construction that a belt-shaped light source such as a fluorescent light tube is arranged on a side surface, that is, an edge of a light diffusion plate called as a light guiding plate to emit light from the front surface of the light guiding plate.

The conventional system requires various kinds of considerations such as dissipation of heat generated by the fluorescent light tube, mechanical protection of the fluorescent tube and so on. Especially, the conventional lighting system using a high-intensity light source having a large heat generation is liable to cause breakage and accordingly requires mechanical protection. Further, the conventional lighting system cannot be used in a place where electric power is not recommended to be used or requires explosion-proof.

Therefore, a method is being studied in which light from a light source is guided to a side surface of a light guiding plate using a large number of optical fibers.

However, the above-mentioned method using a large number of optical fibers requires a considerably complex construction that the large number of optical fibers are integrated in a bundle in the light source side and, in the light guiding plate side, the fibers are independently separated and distributed along the side surface of the light guiding plate.

Thereby, the conventional method using the large number of optical fibers has a disadvantage as following.

(1) The construction of the optical fiber cables becomes complex, and connection of the optical fiber cable to the light source and the light guiding plate also becomes complex, which results in high cost.

(2) The lighting system becomes large in size and heavy in weight since there is required a space for introducing the optical fiber cables around a connection portion between the light guiding plate and the optical fiber cables with taking bend of the optical cables into consideration. Further, it is not preferable from the aspect of appearance that a surface of the lighting system other than the light emitting surface becomes large.

SUMMARY OF THE INVENTION

An object of the present invention is to solve the above-mentioned problems and to provide a lighting system of plane light emission type or line light emission type which is small in size and light in weight.

The object of the present invention can be attained by providing a lighting system in which light incident into one end of a light guiding rod through an optical fiber connected to a light source is guided to a light reflecting means to emit light from the light reflecting portion, wherein the light guiding rod comprises a light scattering working treated portion being provided on a side surface of the light guiding rod and having a pattern of which the area ratio becomes large as the distance from the one end of the light guiding rod increases.

According to another characteristic of the present invention, the light reflecting means comprises a light guiding plate which receives light at a side surface of the light guiding plate facing the light guiding rod and emits the light from the front surface of the light guiding plate in a form of plane-shape.

According to a further characteristic of the present invention, the light reflecting means comprises a light reflecting portion which is provided on the other end of the light guiding rod and emits the light incident into the one end of the light guiding rod from a side surface of the light rod in a form of a belt-shaped line.

As an optical fiber used in the present invention, a synthesized resin is the most suitable from the viewpoint of flexibility, light weight and handling. It is also necessary to select a material having a high heat resistance in taking temperature rise by heat generation of a light source. As a synthesized resin optical fiber satisfying these conditions, the core is preferably made of a silicone resin having a high heat resistance and a high flexibility, and the cladding is made preferably of a fluoride resin having a low refractive index and a high heat resistance such as poly-tetra-fluoro-ethylene, copolymer of tetra-fluoro-ethylene and hexa-fluoro-ethylene, copolymer of ethylene and tetra-fluoro-ethylene or copolymer of tetra-fluoro-ethylene and vinylidene fluoride.

Although there are a single-core optical fiber and a multi-core optical fiber, the single-core optical fiber is preferable from the viewpoint of light intake efficiency from a light source and coupling efficiency to a light guiding rod, and it is also preferable that the core has a large diameter. From the above reason, it is preferable that the diameter of the core is not smaller than 2 mm and not larger than 30 mm.

That is, there arises a problem in that the light intake efficiency becomes low when the diameter of the core is smaller than 2 mm, and the optical fiber becomes too hard to handle when the diameter is larger than 30 mm.

Further, in the present invention, it is preferable that a light scattering working treated portion for radiating light from the front surface of the light guiding plate by scattering the light incident through the one side surface of the light guiding plate toward the front surface of the light guiding plate is provided in the backside surface of the light guiding plate. The material for the light guiding rod is not limited to a particular material as far as it has a high transparency, and a light guiding rod made of a glass or a resin can be considered as a candidate. A light guiding rod made of a glass has a higher light transmissivity compared to a resin light guiding rod and is effective when the light guiding rod is long. A light guiding rod made of a resin is effective in light weight, workability and easiness of handling. The preferable resins used for the light guiding rod are acrylic resin, polycarbonate resin and polystyrene resin which are excellent in light transmissivity and capability of mass production. Further, it is preferable from the viewpoint of space saving to let the incident light in the light guiding rod through one end of the light guiding rod, but it is possible to let in the light through the both ends of the light guiding rod.

Further, in the present invention, it is preferable that a light scattering working treated portion for radiating light from the front surface of the light guiding plate by scattering the light incident through the one side surface of the light guiding plate toward the front surface of the light guiding plate is provided in the backside surface of the light guiding plate. The light guiding plate is not limited as far as it is a transparent plate, but the preferable materials are synthesized resins having a high transmissivity such as acrylic resin, polycarbonate resin and polystyrene resin from the viewpoint of molding capability and easiness of post-working. It is preferable from the viewpoint of easiness of working that the shape of the light guiding plate is a flat plate, but a curved plate may be acceptable from the viewpoint of lighting and design. Further, it is preferable from the viewpoint of space-saving to let the incident light in the light guiding plate through one side surface of the light guiding plate, but it is possible to let in the light through the two side surfaces, three side surfaces or four side surfaces, that is, all of the side surfaces of the light guiding plate depending on a situation. Furthermore, the front surface of the light guiding plate may be covered with a light diffusion film so that the pattern of the light scattering working treated portion is not seen from the front surface side of the light guiding plate, and also may be covered with a light focusing film having a lens function. In addition to these, the backside surface of the light guiding plate may be covered with a light reflecting member, if necessary.

A light scattering working treated portion provided in the light guiding rod or the light guiding plate has an appropriate pattern formed by applying a diffusion paint or cutting flaws. Thereby, light incident into the light guiding rod or the light guiding plate is diffused by the light scattering working treated portion to be emitted in the direction perpendicular to the incident light direction, that is, emitted from the front surface of the light guiding plate or the side surface of the light guiding rod in the side of the light emitting plate.

In order to attain the above object of the present invention, it is provided a lighting system in which light is let in from one end of a light guiding rod and emitted from a side surface of said light guiding rod in a form of a belt-shaped line, which further comprises a light scattering working treated portion having a pattern of which the area ratio becomes large as the distance from the one end of the light guiding rod increases, the pattern being provided on a surface of the light guiding rod in the reverse side of the light emitting surface; and a light reflecting portion provided in the other end of the light guiding rod. In this case, although an intensity of the light incident into the light guiding rod is attenuated from the one end toward the other end, an intensity of the belt-shaped light emitted from the light emitting surface of the light guiding rod becomes uniform since the light scattering working treated portion has the pattern of which the area ratio becomes larger from the one end of the light guiding rod toward the other end and consequently an intensity of light scattered or reflected by the light scattering working treated portion is increased from the one end of the light guiding rod toward the other end. Further, in this case, the reflecting portion is preferably a reflecting mirror or a diffusion reflecting plate.

In the present invention, a refractive index matching oil having a refractive index approximately equal to a refractive index of the light guiding rod may be applied on the surface of the light guiding rod. In this case, even if there are very small flaws on the surface of the light guiding rod, degradation in light emitting characteristic can be prevented since the flaws are evened and scattering of light on the light emitting surface is prevented.

In the present invention, the refractive index $n_m$ of the refractive index matching oil and the refractive index $n_0$ of the light guiding rod may satisfy the following relation (1):

$$0.95\, n_0 < n_m < 1.05\, n_0. \tag{1}$$

In the present invention, the end surface in the other end of the light guiding rod may be an inclining flat surface.

In the present invention, it is preferable that an angle $\theta$ of the inclining surface is not smaller than 91° and not larger than 100° . When the inclining angle is smaller than 91° , particularly smaller than 90° , it is easy to perform working of the end surface. However, an amount of light turning back to the optical fiber becomes large. On the other hand, when the inclining angle is larger than 100° , light emission only near the other end portion of the light guiding rod becomes large and accordingly unevenness appears in the light emission.

In the present invention, the end surface in the other end of said light guiding rod may be a convex surface.

In the present invention, it is preferable from the view point of working that the pattern of said light scattering working treated portion is of rectangles.

Therein, as the diffusion material, a paint type diffusion material is easy to be handled. The preferable materials for the light guiding rod are synthesized resins having a transmissivity, particularly acrylic resin is preferable from the viewpoint of high transmissivity, molding capability and low cost.

In the present invention, it is preferable that the distribution of the area ratio in the pattern occupied by the diffusion paint or the cut-flaws of the light scattering working treated portion is determined so that the brightness of the light emitting surface of the light guiding rod becomes uniform in the longitudinal direction.

In the present invention, the light diffusion working treated portion may be formed using an adhesive tape applied with a diffusion paint or an adhesive tape made of a diffusion resin film.

In the present invention, it is preferable that the refractive index $n_t$ of the adhesive used in the adhesive tape and the refractive index $n_0$ of the light guiding rod satisfy the following relation (2):

$$0.95\, n_0 < n_m < 1.05\, n_0. \tag{2}$$

When the refractive index $n_t$ of the adhesive is out of the range expressed by the above relation (2), intensity of the emitted light is decreased.

In the present invention, a translucent milky white diffusion member may be arranged in front of the light emitting surface of the light guiding rod.

In the present invention, the outer periphery of the light guiding rod may be coated with a cladding layer made of a transparent resin and the outer periphery of the cladding layer may be coated with a light diffusion sheet. Further, in order to mechanically protect the light guiding rod or to protect the refractive index matching oil layer, the periphery of the light guiding rod may be coated with a transparent resin tube.

It is preferable that the transparent resin tube is a transparent heat shrinking tube to keep adherence after coating. Preferable materials for the transparent resin tube are polyethylene, copolymer of ethylene-vinyl-acetate, copolymer of tetra-fluoro-ethylene and hexa-fluoro-propylene, and copolymer of tetra-fluoro-ethylene and perfluoro-alkyl ether which have a high transmissivity and a high adhesive capability.

It is preferable that the optical fiber is of a single-core synthetic resin core and has a core diameter not smaller than 3 mm and not larger than 30 mm. A bundle fiber made of glass is high in cost, and a light intensity sufficient for a belt-shaped light emission body cannot obtained when the diameter of the core is smaller than 3 mm, and the synthetic resin optical fiber becomes too hard to handle when the diameter is larger than 30 mm.

In the present invention, the cross-sectional shape of the light guiding rod may be circular or elliptic.

In the present invention, the cross-sectional shape of the light guiding rod may be polygonal. Especially, it is preferable that the shape of the light guiding rod is a polygonal prism of which number of angles is not less than four. A triangle prism cannot provide a light guiding rod having an excellent light emission intensity characteristic.

In the present invention, the shape of the light guiding rod may be thin and tapered from one end to the other end.

## BRIEF DESCRIPTION OF THE DRAWINGS

FIG.1 is a view showing the whole system of an embodiment of a lighting system in accordance with the present invention.

FIG.2 is a top view of the light guide rod of FIG.1 seeing from the direction of an arrow A indicated in FIG.1.

FIG.3 is a view showing the whole system of another embodiment of a lighting system in accordance with the present invention.

FIG.4 is a top view of the light guide rod of FIG.3 seeing from the direction of an arrow C indicated in FIG.3.

FIG.5 is an enlarged view showing the vicinity of the other end of the light guiding rod shown in FIG.3.

FIG.6 is an enlarged cross-sectional view showing the light guiding rod shown in FIG.3.

FIG.7 is a view showing the whole system of a further embodiment of a lighting system in accordance with the present invention.

FIG.8 is a top view of the light guide rod of FIG.7 seeing from the direction of an arrow D indicated in FIG.7.

FIG.9 is an enlarged side view showing the vicinity of the other end of the light guiding rod.

FIG.10 (a) is a partial side view of another embodiment of a light guiding rod of a lighting system in accordance with the present invention, and (b) is a cross-sectional view showing the light guiding rod.

FIG.11 (a) is a partial side view of a further embodiment of a light guiding rod of a lighting system in accordance with the present invention, and (b) is a cross-sectional view showing the light guiding rod.

FIG.12 (a) is a partial side view of a still further embodiment of a light guiding rod of a lighting system in accordance with the present invention, and (b) is a cross-sectional view showing the light guiding rod.

FIG.13 (a) is a view showing a light scattering working treated pattern of a light guiding rod, (b) is a cross-sectional view of the light guiding rod, and (c) is a view showing emitted light from the light guiding rod seeing through a diffusion sheet.

FIG.14 (a) and (b) are views explaining change in a light emitting angle when an angle $\alpha$ of applying a diffusion coating is varied.

FIG. 15 (a) is a view showing a light scattering working treated pattern in a modification of a light guiding rod of a lighting system in accordance with the present invention, and (b) is a view showing the outer appearance of the light guide rod.

FIG. 16 (a) is a view showing a light scattering working treated pattern in another modification of a light guiding rod of a lighting system in accordance with the present invention, and (b) is a view showing the outer appearance of the light guide rod.

DETAILED DESCRIPTION OF THE PREFERRED EMBODIMENTS

Embodiments of the present invention will be described in detail below, referring to the accompanying drawings.

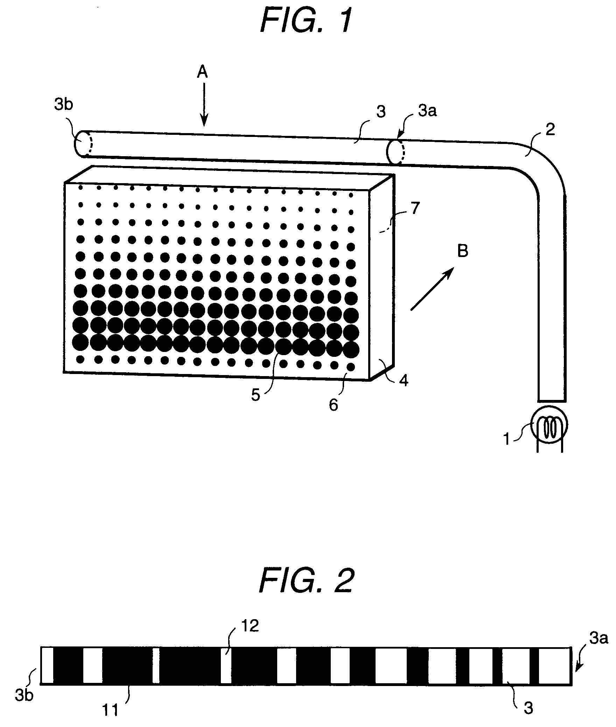

FIG.1 and FIG.2 are views showing an embodiment in accordance with the present invention. FIG.1 is a view showing the whole lighting system. FIG.2 is a top view of the light guide rod of FIG.1 seeing from the direction of an arrow A indicated in FIG.1.

In FIG.1, the reference character 1 indicates a light source such as a halogen lamp of 100W, light of the light source 1 is transmitted to one end 3a of a light guiding rod 3, shown in right-hand side of the figure, through an optical fiber 2. A belt-shaped light beam is emitted from the light guiding rod 3 toward one side surface of a light guiding plate 4. The light incident into the light guiding plate 4 is scattered on a light scattering working treated portion 5 in a backside surface 6 and emitted from a front surface 7 of the light guiding plate 4.

The optical fiber 2 comprises a core made of silicone rubber having a refractive index of 1.50 and a cladding made of copolymer of tetra-fluoro-ethylene and hexa-fluoro-propylene. The diameter of the core is 10 mm, the thickness of the cladding is 0.5 mm and the length of the fiber is 2 m.

The light guiding rod 3 is a cylinder having a diameter of 10 mm and a length nearly of 500mm between the both ends 3a, 3b made of acrylic resin. As shown in FIG.2, in the backside surface of the light guiding rod 3 opposite to the surface emitting light, that is, the light emitting surface, there is provided a light scattering working treated portion 11 which is formed by applying a diffusion paint containing titanium oxide fine particles in an appropriate pattern. When the light from the optical fiber is irradiated onto the light scattering working treated portion 11 made of the diffusion paint, the light is scattered on the light scattering working treated portion 11 and emitted toward the light guiding plate 4. In FIG.2, the reference character 12 indicates a portion on which the diffusion paint is not applied.

The light guiding plate 4 is a plate made of acrylic resin having a width of 500 mm, a height of 300 mm and a thickness of 10 mm. As shown in FIG.1, in a surface of the light guiding plate 4 opposite to the front surface 7 emitting light, that is, the backside surface 6, there is provided a light scattering working treated portion 5 which is formed by applying a diffusion paint containing titanium oxide fine particles in an appropriate pattern.

As described above, according to the present invention, a small-size and light-weight lighting system of plane-emitting type separated from the light source can be realized by arranging the light guiding rod 3 between the light guiding plate 4 and the optical fiber 2 and by containing the light guiding plate 4 and the light guiding rod 3 in a case together.

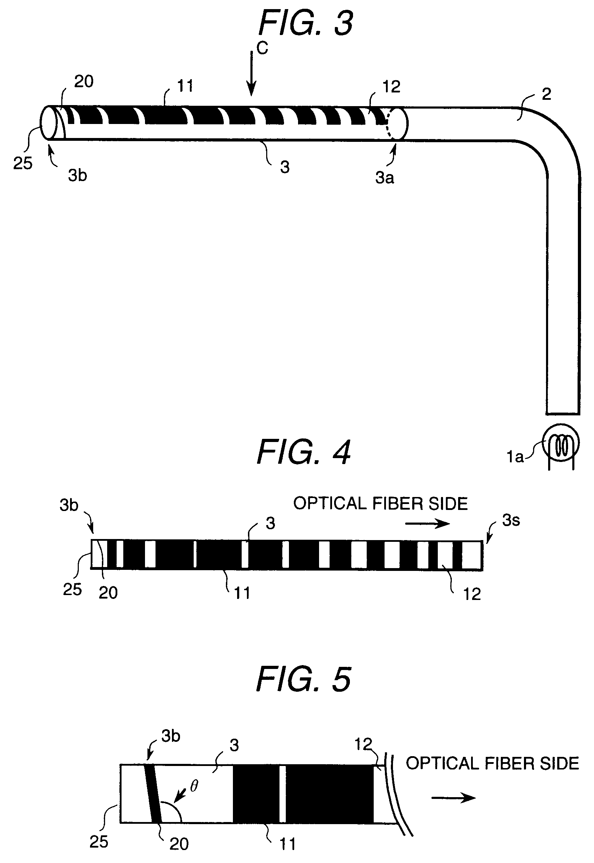

FIG.3 is a view showing another embodiment of a lighting system in accordance with the present invention. FIG.4 is a top view of the light guide rod of FIG.3 seeing from the direction of an arrow C indicated in FIG.3. FIG.5 is an enlarged view showing the vicinity of the other end 3b of the light guiding rod shown in FIG.3.

A different point of the lighting system of FIG.3 from that of FIG.1 is that the light guiding plate is not provided but a reflecting portion 20 is provided in the other end 3b of the light guiding rod. However, a light guiding plate may be arranged in the same way as in the lighting system shown in FIG.1. In these figures, the same parts as those in the lighting system of FIG.1 are indicated by the same reference characters.

Referring to FIG.3, the reference character 1a indicates a light source of a metal halide lamp of 60 W, and light of the light source 1a is transmitted to the one end 3a, right hand side end in the figure, through an optical fiber 2. The reference character 25 indicates a reflecting plate fixing plate. The optical fiber 2 comprises a core made of silicone rubber and a cladding made of copolymer of tetra-fluoro-ethylene and hexa-fluoro-propylene. The diameter of the core is 10 mm, the thickness of the cladding is 0.5 mm and the length of the fiber is 2 m.

As shown in FIG.4, in the backside surface of the light guiding rod 3 opposite to the surface emitting light, that is, the reverse side of the page of the figure, there is provided a light scattering working treated portion 11 which is formed by applying a diffusion paint containing titanium oxide fine particles in a pattern composed of rectangles. The area ratio applied with the diffusion paint becomes large as the distance from the one end 3a of the light guiding rod 3 increases. However, the area ratio applied with the diffusion paint of the light scattering working treated portion 11 near the other end 3b, that is, left hand side end in the figure, of the light guiding rod 3 is small in taking light reflection from the other end surface into consideration. The end surface of the other end 3b the light guiding rod 3 is not perpendicular to the longitudinal direction of the light guiding rod 3 but inclined with an inclining angle $\theta$ of 93° , as shown in FIG.5.

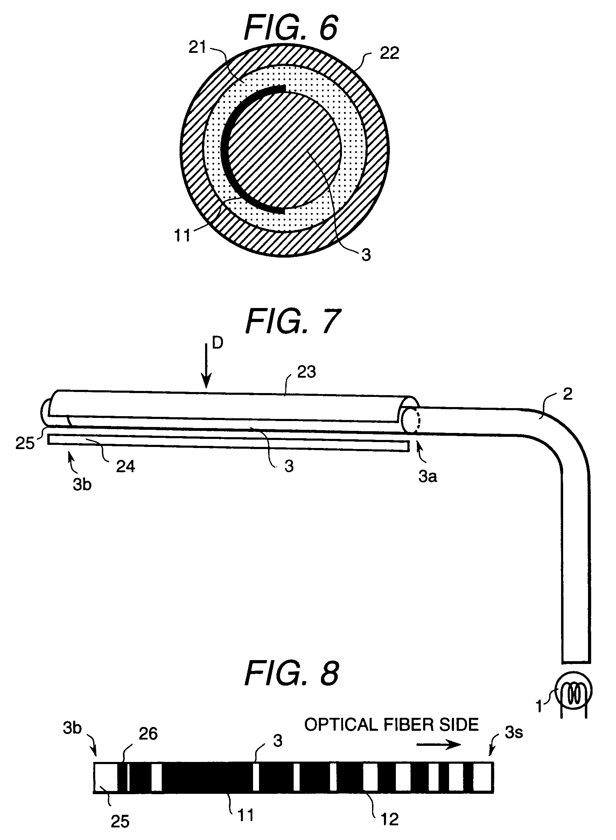

On the end surface in the other end 3b of the light guiding rod 3, there is provided a light reflecting portion 20 which is a PET (polyethylene-terephthalate) film having a thickness of 0.1 mm vapor-deposited with silver. The light guiding rod 3 is a cylinder having a diameter of nearly 10 mm and a length of nearly 300 mm made of acrylic resin having a refractive index of 1.49. The outer periphery of the light guiding rod 3 is applied with a refracting index matching oil 21 of silicone oil having a refracting index of 1.50 to prevent degradation of light emission due to very small flaws on the surface of the light guiding rod 3 made of acrylic resin. a heat shrinking tube 22 made of copolymer of tetra-fluoro-ethylene and hexa-fluoro-propylene covers the outer periphery of the refractive index matching oil 21 to protect the refractive index matching oil 21 and the light guiding rod 3, as shown in FIG.6 which is an enlarged cross-sectional view of the light guiding rod shown in FIG.3.

When light is let in from the optical fiber 2 into the other end 3b of the light guiding rod 3, an intensity of the light incident into the light guiding rod 3 is gradually attenuated from the one end 3a toward the other end 3b. However, an intensity of the belt-shaped light emitted from the light emitting surface of the light guiding rod 3 becomes uniform since the light scattering working treated portion 11 has the pattern of which the area ratio becomes larger from the one end 3a of the light guiding rod toward the other end 3b and consequently an intensity of light scattered or reflected by the light scattering working treated portion 11 is increased from the one end 3a of the light guiding rod toward the other end 3b.

As described above, according to the present invention, a small-size and light-weight lighting system of line-emitting type separated from the light source can be realized.

(Embodiment 1)

FIG.7 is a view showing an embodiment of a lighting system in accordance with the present invention. FIG.8 is a view of the light guide rod of FIG.7 seeing from the direction of an arrow D indicated in FIG.7. In these figures, the same parts as those in the lighting system of FIG.3 are indicated by the same reference characters.

A different point of the lighting system of FIG.7 from that of FIG.3 is that A side surface reflecting mirror 23 as a reflecting plate is provided in the side surface in the backside of the light guiding rod and a diffusion member 24 is provided in the front surface of the light guiding rod 3. However, it is possible to arrange the light guiding plate of FIG.1 instead of the diffusion member 24.

In the end surface of the other end 3b of the light guiding rod 3, a film 26 having vapor-deposited silver is provided through a reflecting plate fixing plate 25. The side surface reflecting mirror 23 is arranged so as to wrap, the side surface except for a light emitting surface from the reflecting plate fixing plate 25 to the one end 2a of the light guiding rod 3. In the front surface of the light emitting surface of the light guiding rod 3, a diffusion member 24 made of an acrylic milky white plate (Sumipex 030 opal; a trade mark of Sumitomo Chemical Campany Limited) having a thickness of 2 mm is provided in order to reduce unevenness in emitted light due to the pattern in the light scattering working treated portion 11 on the backside surface of the light guiding rod 3.

When light was let in the one end 3a of the light guiding rod 3, an average brightness on the diffusion member 24 was 6500 cd/m.

(Embodiment 2)

This embodiment is the lighting system of Embodiment 1 in which the inclining angle $\theta$ of the end surface in the other end 3b of the light guiding rod 3 is set to 95° .

(Embodiment 3)

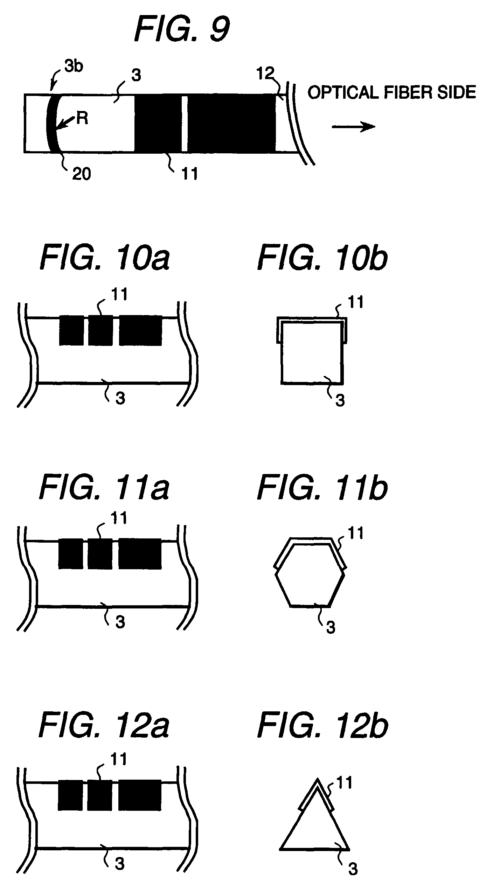

This embodiment is the lighting system of Embodiment 1 in which the end surface in the other end 3b of the light guiding rod 3 is formed in a convex curved surface having a radius R of 50 mm, as shown in FIG.9. FIG. 9 is an enlarged side view of the vicinity of the other end of the light guiding rod.

(Embodiment 4)

This embodiment is the lighting system of Embodiment 1 in which the refractive index $n_m$ of the refractive matching oil 21 in the light guiding rod 3 is set to 1.52.

(Embodiment 5)

This embodiment is the lighting system of Embodiment 1 in which the refractive index $n_m$ of the refractive matching oil 21 in the light guiding rod 3 is set to 1.40.

(Embodiment 6)

This embodiment is the lighting system of Embodiment 1 in which a type A tape is used in the light scattering working treated portion of the light guiding rod 3 and the refractive index of the adhesive is to 1.50.

(Embodiment 7)

This embodiment is the lighting system of Embodiment 1 in which a type A tape is used in the light scattering working treated portion of the light guiding rod 3 and the refractive index of the adhesive is to 1.53.

(Embodiment 8)

This embodiment is the lighting system of Embodiment 1 in which a type B tape is used in the light scattering working treated portion of the light guiding rod 3 and the refractive index of the adhesive is to 1.50.

(Embodiment 9)

This embodiment is the lighting system of Embodiment 1 in which the cross-sectional shape of the light guiding rod 3 is a square having a side length of 9 mm, as shown in FIG.10. FIG.10 (a) is a partial side view of the light guiding rod, and FIG.10 (b) is a cross-sectional view showing the light guiding rod.

(Embodiment 10)

This embodiment is the lighting system of Embodiment 1 in which the cross-sectional shape of the light guiding rod 3 is an equilateral hexagon having a side length of 5 mm, as shown in FIG.11. FIG.11 (a) is a partial side view of the light guiding rod, and FIG.11 (b) is a cross-sectional view showing the light guiding rod.

(Comparative Example 1)

This example is the lighting system of Embodiment 1 in which the inclining angle $\theta$ of the end surface in the other end 3b of the light guiding rod 3 is set to 90° .

(Comparative Example 2)

This example is the lighting system of Embodiment 1 in which the inclining angle $\theta$ of the end surface in the other end 3b of the light guiding rod 3 is set to 100° .

(Comparative Example 3)

This example is the lighting system of Embodiment 1 in which the refractive index $n_m$ of the refractive matching oil 21 in the light guiding rod 3 is set to 1.59.

(Comparative Example 4)

This example is the lighting system of Embodiment 1 in which the refractive matching oil 21 is not applied to the light guiding rod 3.

(Comparative Example 5)

This example is the lighting system of Embodiment 1 in which a type A tape is used in the light scattering working treated portion of the light guiding rod 3 and the refractive index of the adhesive is to 1.39.

(Comparative Example 6)

This example is the lighting system of Embodiment 1 in which a type A tape is used in the light scattering working treated portion of the light guiding rod 3 and the refractive index of the adhesive is to 1.60.

(Comparative Example 7)

This example is the lighting system of Embodiment 1 in which the cross-sectional shape of the light guiding rod 3 is an equilateral triangle having a side length of 13 mm, as shown in FIG.12. FIG.12 (a) is a partial side view of the light guiding rod, and FIG.12 (b) is a cross-sectional view showing the light guiding rod.

The above-mentioned embodiments 1 to 10 and the above-mentioned comparative examples 1 to 7 are summarized in Table 1 to Table 4.

Table 1

| ITEM | STATE OF END SUR-FACE | AVERAGE BRIGHT-NESS (cd/cm$^2$) |
|---|---|---|
| EMBODIMENT 1 | $\theta$=93° | 6500 |
| EMBODIMENT 2 | $\theta$=95° | 5700 |
| COMPARATIVE EXAMPLE 1 | $\theta$=90° | 4800 |
| COMPARATIVE EXAMPLE 2 | $\theta$=105° | 2200 |
| EMBODIMENT 3 | convex surface R=50 | 6300 |
| R: radius of curvature (mm) | | |

Table 2

| ITEM | REFRACTIVE INDEX OF REFRACTIVE MATCHING OIL | AVERAGE BRIGHT-NESS (cd/cm$^2$) |
|---|---|---|
| EMBODIMENT 1 | 1.50 | 6500 |
| EMBODIMENT 4 | 1.52 | 6000 |
| EMBODIMENT 5 | 1.40 | 4000 |
| COMPARATIVE EXAMPLE 3 | 1.59 | 4300 |
| COMPARATIVE EXAMPLE 4 | without oil | 3000 |
| refractive index of light guiding rod $n_0$=1.49 | | |

Table 3

| ITEM | KIND OF TAPE | REFRACTIVE INDEX OF ADHESIVE | AVERAGE BRIGHTNESS (cd/cm$^2$) |
|---|---|---|---|
| EMBODIMENT 6 | TYPE A | 1.50 | 5800 |
| EMBODIMENT 7 | TYPE A | 1.53 | 5500 |
| EMBODIMENT 8 | TYPE B | 1.50 | 5200 |
| COMP.EXAMPLE 5 | TYPE A | 1.39 | 4100 |
| COMP.EXAMPLE 6 | TYPE A | 1.60 | 3900 |
| refractive index of light guiding rod $n_0$=1.49<br>TYPE A: PET film containing titanium oxide of 1 wt% having a thickness of 0.1 mm and adhesive<br>TYPE B: PET film having a thickness of 0.1 mm applied with the diffusion paint of Embodiment 1 and adhesive on the surface opposite to the diffusion paint applied surface | | | |

Table 4

| ITEM | SHAPE OF LIGHT GUIDING ROD | AVERAGE BRIGHT-NESS (cd/cm$^2$) |
|---|---|---|
| EMBODIMENT 1 | 10 mm$\varnothing$ | 6500 |
| EMBODIMENT 9 | square, 9 mm side | 5000 |
| EMBODIMENT 10 | equilateral hexagon, 5mm side | 5200 |
| COMPARATIVE EXAMPLE | 7 equilateral triangle, 13 mm side | 2000 |

Table 1 shows cases in which the inclining angle θ and the shape of the end surface in the other end 3b of the light guiding rod 3 are varied. The average brightness was measured under the same condition as in Embodiment 1 except for the inclining angle θ and the shape of the end surface.

Table 2 shows cases in which the refractive index of the refractive index matching oil 21 is varied.

Table 3 shows cases in which the kind and the refractive index of the light scattering working treated portion provided on the backside surface of the light emitting surface of the light guiding rod 3.

Table 4 shows cases in which the shape of the light guided rod 3 is varied.

It can be understood from Table 1 to Table 4 that the inclining angle θ and the shape of the end surface in the other end 3b of the light guiding rod 3 is preferably set to an angle with in a range not smaller than 91° and not larger than 100°, the refractive index n of the refractive index matching oil 21 is preferably selected so as to satisfy the relation (1), the refractive index of the adhesive tape is preferably selected so as to satisfy the relation (2), and the cross-sectional shape of the light guiding rod 3 is preferably formed in a polygon having number of angles not less than four or in a circle.

As described above, according to the present invention, it is possible to provide a small-size and light-weight lighting system of line-emitting type which is easy in handling and is excellent in safety. The lighting system can be also used as a back light source of edge light type.

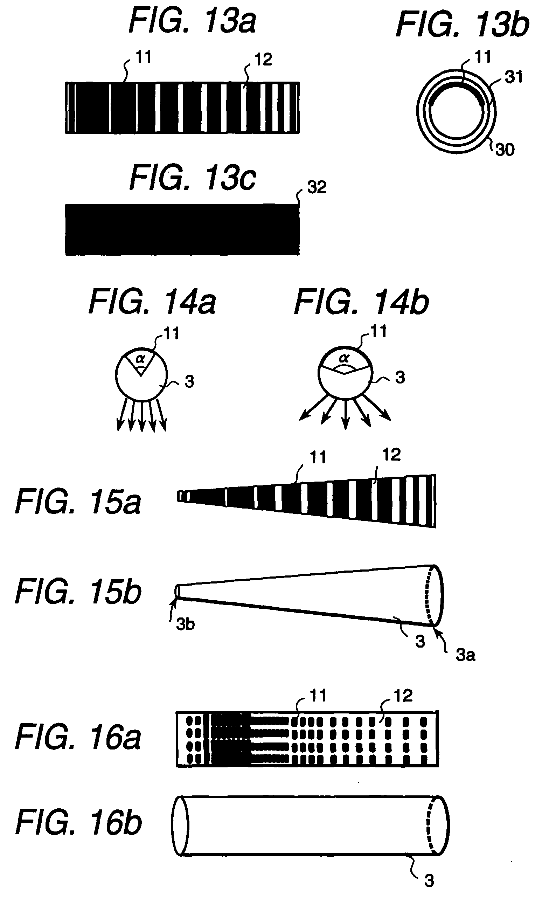

As shown in FIG.2 and FIG. 4, the light scattering working treated portion 11 is formed in the light guiding rod 3 in a form that the area ratio of the light scattering working treated portion is increased from the one end 3a toward the other end 3b. By this configuration, the intensity ratio of emitted light in the side surface of the light guiding rod 3 can be made uniform. However, when the lighting system is used as an alternative of a lamp such as a fluorescent lamp, the lighting system is not a perfect line-emitting lighting system since the pattern of the light emitting portion, that is, portions not applied with the light scattering working treatment 11 is directly brightened, as shown in FIG.13 (a). Here, FIG.13 (a) is a view showing a pattern of light scattering working treatment of the light guiding rod.

Therefore, the inventors of the present invention proposed a modification in order to solve the imperfect light emitting state of the light guiding rod 3.

A modification of a lighting system in accordance with the present invention will be described below.

(Modification 1)

Although it can be considered that a diffusion sheet 30 is attached on the outer periphery of the light guiding rod 3, diffusion of light is caused in the interface between the diffusion sheet 30 and the light emitting portion when the diffusion sheet 30 is directly attached on the outer periphery of the light guiding rod 3 and consequently light is scattered toward unnecessary directions to cause light loss. Therefore, the light guiding rod 3 is coated with a cladding 31 and the outer periphery of the cladding 31 is coated with a diffusion sheet 30, as shown in FIG.13 (b). By doing so, only the light scattered by the light scattering working treated portion 11 is emitted external out of the light guiding rod 3, and passing the light through the diffusion sheet 30 makes the pattern in the light emitting portion not seen directly, as shown in FIG.13 (c). As a result, it is possible to obtain a line-emission type lighting system like a fluorescent lamp without bright spots. The material for the cladding 31 used is copolymer of tetra-fluoro-ethylene and hexa-fluoro-propylene having a refractive index of 1.34. FIG.13 (b) is a cross-sectional view of the light guiding rod, and FIG.13 (c)is a view showing emitted light 32 out of the light guiding rod when it seen through the diffusion sheet.

(Modification 2)

The best cross-sectional shape of the light guiding rod 3 is a circle or an ellipse. The reason is that light emitting angle can be easily adjusted by varying the applying angle α , shown in FIG.14 (a), (b), of the diffusion paint for the light scattering working treated portion 11. FIG.14 (a) and (b) are views explaining change in the light emitting angle when the applying angle $\alpha$ is varied.

However, when the light guiding rod 3 is very long, the area of the light scattering working treated portion 11 must be decreased in order to transmit light up to a position far from the one end 3a of the light guiding rod 3. Therefore, it is necessary to make the applying angle $\alpha$ small. Accordingly, the light emitting angle is limited to a small value, and in order to make the emitting angle large some modifications such as employing a lens system are required and the lighting system is made complex. When a light guiding rod having a polygon cross-section is employed, light can be transmitted up to a position far from the one end 3a of the light guiding rod 3 though the emitting angle is determined to some extent depending on the shape of the polygon.

There are two methods for effectively using the incident light to the light guiding rod 3, and one is a method in which the end surface in the other end 3b of the light guiding rod 3 is vapor-deposited with a metal to reflect light in a high efficiency or applied with a diffusion paint, as described above.

(Modification 3)

The other method is that the light guiding rod 3 is formed in a tapered shape in which the cross-sectional area decreases from the one end 3a toward the other end 3b. When the light guiding rod is formed in the tapered shape, all the light can be utilized as the belt-shaped light emitted out of the side surface without using any reflecting member, as shown in FIG.15. FIG.15 (a) is a view showing a light scattering working treated pattern in a modification of a light guiding rod of a lighting system in accordance with the present invention, and (b) is a view showing the outer appearance of the light guide rod.

Although the halogen lamp or the metal halide lamp is used as the light source in the embodiments described above, an LED or sun light may be used. The optical fiber is not limited to the resin optical fiber, but a glass bundle fiber may be used as far as it can efficiently take in light from the light source. The shape of the light guiding rod is not limited to a circular cylinder, but an elliptic cylinder, a rectangular prism, a pentagonal prism may be used. Materials usable for the light guiding rod are polycarbonate resin, silicone resin, glass and so on. A shape of applying the diffusion paint may be circular or elliptical as Modification 4 shown in FIG.16, other than rectangular. Further, the shape of applying the diffusion paint may be polygonal. The diffusion paint materials usable are magnesium oxide, zinc sulfide in addition to titanium oxide. The materials usable for the reflecting portion are an aluminum thin film, an aluminum foil, a stainless foil in addition to the silver thin film. Here, FIG. 16 (a) is a view showing a light scattering working treated pattern in another modification of a light guiding rod of a lighting system in accordance with the present invention, and (b) is a view showing the outer appearance of the light guide rod.

Summarizing the above, the present invention has the following excellent effect.

It is possible to realize a lighting system of plane light emitting type or line light emitting type which is small in size and light in weight.

**Claims**

1. A lighting system in which light incident into one end (3a) of a light guiding rod (3) through an optical fibre (2) connected to a light source (1) is guided to a light reflecting means and emitted therefrom,
   wherein said light guiding rod (3) comprises a light scattering working treated portion (11) provided on a side surface of said rod (3) and having a pattern the area ratio of which increases with increasing distance from said one rod end (3a).

2. The lighting system of claim 1, wherein said light reflecting means comprises a light guiding plate (4) which receives light at a side surface facing said light guiding rod (3) and emits the light from a front surface (7) in a plane-shaped form.

3. The lighting system of claim 2, wherein said optical fibre (2) is made of heat resistant plastics material.

4. The lighting system of claim 2, wherein said light scattering working treated portion (11) of the rod (3) is provided in the side opposite said light guiding plate (4).

5. The lighting system of claim 2, wherein a second light scattering working treated portion (5) is provided in a back surface of said light guiding plate (4) for emitting light from the front surface (7) of said plate (4) by scattering the light incident through said one side surface of said plate (4) toward said front surface (7).

6. The lighting system of claim 4 or 5, wherein the light scattering working treated portion (5) of said plate (4) has a pattern formed by applying a diffusion paint or by cutting flaws.

**7.** The lighting system of claim 1, wherein said light reflecting means comprises a light reflecting portion (20) which is provided on the other end (3b) of said light guiding rod (3) and emits light incident into the one rod end (3a) from a side surface of the rod (3) in the form of a belt-shaped line.

**8.** The lighting system of claim 7, wherein a refractive index matching oil (21) having a refractive index approximately equal to that of the light guiding rod (3) is applied on the surface of said rod (3).

**9.** The lighting system of claim 8, wherein the refractive index $n_m$ of said refractive index matching oil (21) and the refractive index $n_0$ of said light guiding rod (3) satisfy the relation

$$0.95\, n_m < n_m < 1.05\, n_0.$$

**10.** The lighting system of claim 7, wherein the end surface (20) in the other rod end (3b) is an inclined flat surface.

**11.** The lighting system of claim 10, wherein an angle $\theta$ of said inclined surface (20) is not smaller than 91" and not larger than 100"

**12.** The lighting system of claim 7, wherein the end surface (20) in the other rod end (3b) is convex.

**13.** The lighting system of claim 1, wherein the pattern of said light scattering working treated portion (11) is constituted by rectangles.

**14.** The lighting system of claim 7, wherein the distribution of the area ratio in the pattern occupied by diffusion paint or cut-flaws of said light scattering working treated portion (11) is determined so that the brightness of the light emitting surface of said rod (3) becomes uniform in the longitudinal direction.

**15.** The lighting system of claim 1, wherein said light diffusion working treated portion (11) is formed by an adhesive tape applied with a diffusion paint or made of a diffusion resin film.

**16.** The lighting system of claim 15, wherein the refractive index $n_t$ of an adhesive used in said adhesive tape and the refractive index $n_0$ of said light guiding rod (3) satisfy the relation

$$0.95\, n_0 < n_t < 1.05\, n_0.$$

**17.** The lighting system of claim 7, wherein a translucent milky white diffusion member (24) is arranged in front of the light emitting surface of said light guiding rod (3).

**18.** The lighting system of claim 1, wherein the outer periphery of said light guiding rod (3) is coated with a cladding layer (31) made of a transparent resin, and the outer periphery of said cladding layer (31) is coated with a light diffusion sheet (30).

**19.** The lighting system of claim 1, wherein the cross-sectional shape of said light guiding rod (3) is circular or elliptic or polygonal.

**20.** The lighting system of claim 1, wherein said light guiding rod (3) is thin and tapers from one end (3a) to the other end (3b).

*FIG. 1*

*FIG. 2*

# FIG. 3

# FIG. 4

OPTICAL FIBER SIDE

# FIG. 5

OPTICAL FIBER SIDE

*FIG. 6*

*FIG. 7*

*FIG. 8*

OPTICAL FIBER SIDE

## FIG. 9

OPTICAL FIBER SIDE

## FIG. 10a

## FIG. 10b

## FIG. 11a

## FIG. 11b

## FIG. 12a

## FIG. 12b

FIG. 13a

FIG. 13b

FIG. 13c

FIG. 14a

FIG. 14b

FIG. 15a

FIG. 15b

FIG. 16a

FIG. 16b

**European Patent Office**

## EUROPEAN SEARCH REPORT

Application Number

EP 97 10 4634

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 141 308 A (K.MORI) <br> * abstract; figure 2 * <br> --- | 1 | F21V8/00 |
| A | GB 2 153 515 A (M.A.VANN) <br> * page 1, left-hand column, line 60 - right-hand column, line 69; figure 1 * <br> --- | 1 | |
| A | DE 43 29 914 A (A.WILLING) <br> * abstract; figures 5,17 * <br> --- | 1 | |
| A | EP 0 675 318 A (TOSOH) <br> * page 5; figures 7-12 * <br> ----- | 1,2 | |
| | | | **TECHNICAL FIELDS SEARCHED (Int.Cl.6)** <br> F21V <br> G02B <br> G09F |

The present search report has been drawn up for all claims

| Place of search | Date of completion of the search | Examiner |
|---|---|---|
| THE HAGUE | 8 July 1997 | Malic, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document